Europäisches Patentamt

European Patent Office

Office européen des brevets

(19)

(11) Numéro de publication : **0 493 219 A1**

(12) **DEMANDE DE BREVET EUROPEEN**

(21) Numéro de dépôt : **91403480.6**

(22) Date de dépôt : **20.12.91**

(51) Int. Cl.⁵ : **B65G 47/76**

(30) Priorité : **21.12.90 FR 9016073**

(43) Date de publication de la demande :
**01.07.92 Bulletin 92/27**

(84) Etats contractants désignés :
**BE DE ES FR GB NL**

(71) Demandeur : **FABRICATION INDUSTRIELLE
DE MATERIEL POUR LES ENTREPRISES DE
CERAMIQUE FIMEC
Route de Beaupreau
F-49110 Le Pin En Mauges (FR)**

(72) Inventeur : **Pelletier, Jean-Pierre
3 Allée des Peupliers
F-49280 St Léger Sous Cholet (FR)**

(74) Mandataire : **Loyer, Bertrand
Cabinet Pierre Loyer 77, rue Boissière
F-75116 Paris (FR)**

(54) **Dispositif de déviation d'objets circulant sur un transporteur.**

(57) Dispositif de déviation d'objets se déplaçant sur un transporteur (13) dans une direction (F), du genre comportant un bras déflecteur (1) passant d'une position inactive à une position active pour laquelle il est en travers du transporteur (13) par un mouvement combiné au cour duquel il se déplace dans le même sens (F) que le transporteur (13) tout en pivotant sur lui-même, caractérisé par le fait qu'il est constitué par deux bras (1, 2) articulés l'un à l'autre : un premier bras (1), déflecteur, articulé à l'extrémité (8) d'un deuxième bras (2) porteur ; ledit deuxième bras (2), dirigé en sens inverse du déplacement (F) du transporteur (13) étant porté par un arbre moteur vertical (12), situé sur le côté du transporteur (13), cet arbre l'entraînant en rotation soit dans un sens soit dans l'autre ; l'extrémité (1a) du premier bras (1) étant guidée par des moyens (3, 4) l'obligeant à se déplacer le long du transporteur (13) ; de telle sorte que lorsque le dispositif est en position inactive les deux bras (1, 2) sont l'un contre l'autre sur le côté du transporteur (13) et lorsqu'ils sont en position active les deux bras (1, 2) fassent un angle l'un avec l'autre, le premier bras (1) étant en travers du transporteur à environ 45°.

FIG.1

EP 0 493 219 A1

La présente invention a pour objet un dispositif de déviation de colis ou objets divers circulant sur des transporteurs, que ces transporteurs soient à bandes, à courroies, à rouleaux, à galets ou autres.

Jusqu'à présent pour dévier des colis ou analogues circulant sur un transporteur pour les faire passer sur un autre transporteur, formant un angle avec le premier, on utilise un bras rotatif, pivotant sur un axe vertical situé sur le côté du transporteur, ce bras étant actionné (par tout moyen de commande approprié) de façon à se mettre à 45° de la direction d'avancement des colis, ce qui les fait dévier.

Cette disposition présente les inconvénients suivants : lorsque le bras déflecteur se déplace de la position inactive vers la position active, son mouvement s'effectue en sens inverse de celui du déplacement des colis ; de sorte que pour compenser ce mouvement relatif néfaste, il faut donner au bras déflecteur une vitesse de rotation élevée. Si le bras déflecteur est mis en oeuvre au moment où le colis passe à sa hauteur, cette vitesse élevée du bras déflecteur communique au colis des accélérations importantes, qui, dans certains cas, sont incompatibles avec la fragilité des produits. De plus, la force nécessaire pour repousser le colis est importante. Il en résulte que les cadences de fonctionnement des installations devant manutentionner des colis de 80 à 100 cm de côte sont limitées à environ 3.600 colis par heure (1 colis par seconde) alors qu'il est souhaitable de pouvoir opérer à des cadences plus élevées sans brutaliser les colis.

Afin de tenter de résoudre les problèmes de chocs du bras déflecteur contre les colis, il a déjà été proposé des dispositifs dans lesquels ledit bras déflecteur est entraîné suivant un mouvement combinant un déplacement longitudinal dans le sens de défilement du transporteur et un mouvement de rotation amenant le bras en travers dudit transporteur.

De tels dispositifs sont par exemple décrits dans les documents FR 69 38558, DE 26 20 036, DE 27 28 669 et GB 2 223 730.

Dans le FR 69 38558, le dispositif comporte un bras déflecteur courbe dont. l'une des extrémités est guidée le long d'une glissière rectiligne disposée parallèlement au transporteur tandis que l'autre extrémité se déplace au-dessus du transporteur.

Dans une première forme de réalisation, le bras déflecteur est tiré par une tringle de manoeuvre fixée sur le côte du transporteur oppose à celui sur lequel est situe le bras déflecteur. La tringle de manoeuvre est en forme de U renverse et enjambe ledit transporteur.

Une telle disposition ne peut pas être mise en oeuvre pour dévier de gros colis à cause du positionnement de la tringle de manoeuvre au-dessus du transporteur.

Cette disposition peut donc difficilement être utilisée dans une installation de tri destinée à traiter des colis pouvant avoir des dimensions aussi importantes que 1m x 1m x 1,2m, comme il est maintenant souvent demandé.

Ce document propose un second dispositif résolvant le problème de l'encombrement en étant totalement situé du même côté du transporteur, le bras déflecteur est alors guide par deux rails sur lesquels coulissent des manchons portés par ledit bras.

Il a été constaté que dans les dispositifs de déviation de colis utilisant des bras déflecteurs courbes le colis entre en contact avec le bras par un de ses coins ce qui entraîne des chocs assez importants pouvant détériorer son contenu.

C'est pourquoi l'on a utilisé dans les autres documents cités ci-dessus des bras déflecteurs plans pouvant s'appliquer contre une face du colis pour le détourner sans choc brutal.

A l'heure actuelle, il est demandé des dispositifs de déviation de colis capables de fonctionner pour des colis pouvant avoir des dimensions aussi grandes que celles définies plus haut, et peser jusqu'à 70 kg.

Les dispositifs situés d'un seul côté du transporteur connus par les documents cités ne présentent pas la résistance mécanique nécessaire à la déviation de tels colis.

L'invention tend alors à proposer un dispositif de déviation fonctionnant indifféremment pour des colis très encombrants et lourds et pour des colis de faible dimension, par exemple 200 mm x 200 mm x 30mm, pesant 0,5 kg.

Le dispositif de déviation selon l'invention est du genre comportant un bras déflectaur passant d'une position inactive à une position active pour laquelle il est en travers du transporteur par un mouvement combiné au cours duquel il se déplace dans le même sens que le transporteur tout en pivotant sur lui-même, et est caractérisé par le fait qu'il est constitué par deux bras articulés l'un à l'autre : un premier bras, déflecteur, articulé à un deuxième bras, porteur; ledit deuxième bras, dirigé en sens inverse du déplacement du transporteur, étant monté à pivotement sur un axe vertical situé sur le côté du transporteur ; l'extrémité du premier bras étant guidée par des moyens l'obligeant à se déplacer le long du transporteur ; de telle sorte que, lorsque le dispositif est en position inactive, les deux bras sont disposés l'un contre l'autre, sur le côté du transporteur, lorsqu'il est en position active les deux bras fassent un angle l'un avec l'autre, le premier bras étant en travers du transporteur en faisant avec lui un angle d'environ 45°.

L'invention peut également comporter les dispositions suivantes :

a) le bras porteur est animé d'un mouvement de rotation alternative par un moteur tournant toujours dans le même sens par l'intermédiaire de transmission du type bielle manivelle.

b) le guidage de l'extrémité prisonnière du bras déflecteur se fait soit le long d'une droite parallèle

au côté du déflecteur, soit le long d'un trace légèrement incurvé.

A titre d'exemples non limitatifs et pour faciliter la compréhension de l'invention, on a représenté aux dessins annexés:

Figure 1, une vue de dessus, en perspective, d'un premier exemple de réalisation de l'invention, dans ses deux positions extrêmes ;

Figure 2 une vue de dessous, en perspective, du dispositif de la figure 1;

Figure 3 une vue de dessus, en perspective, d'un deuxième exemple de réalisation dans ses deux positions extrêmes ;

Figure 4 une vue de dessous de la figure 3 ;

Figures 5 et 6 deux vues en perspective illustrant le fonctionnement de l'invention.

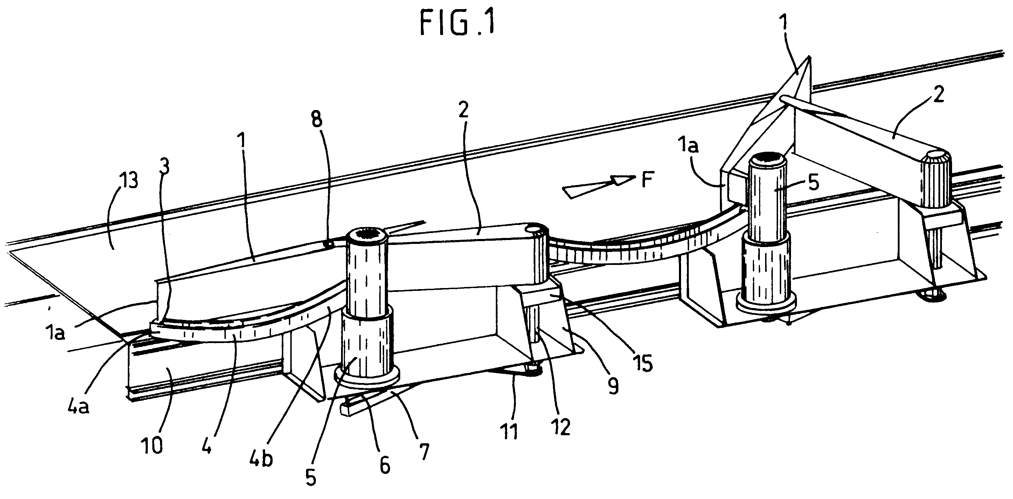

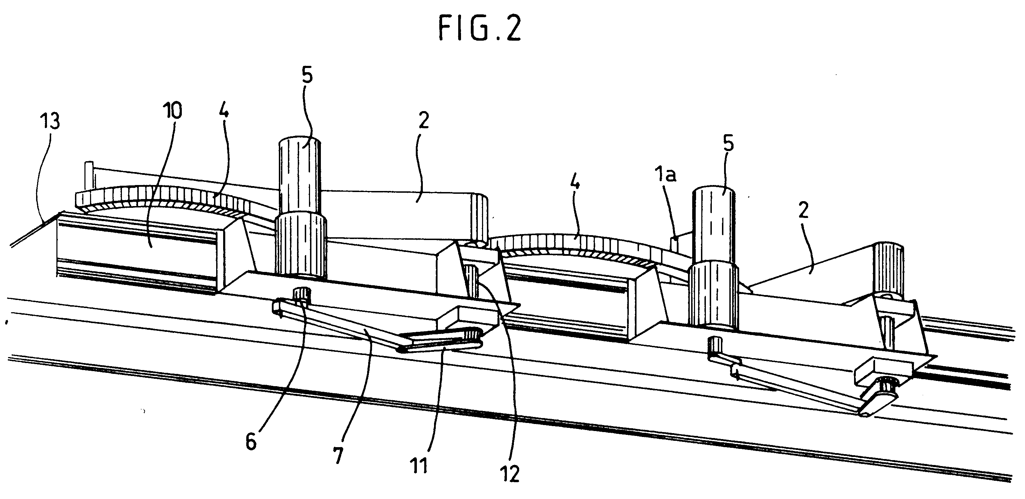

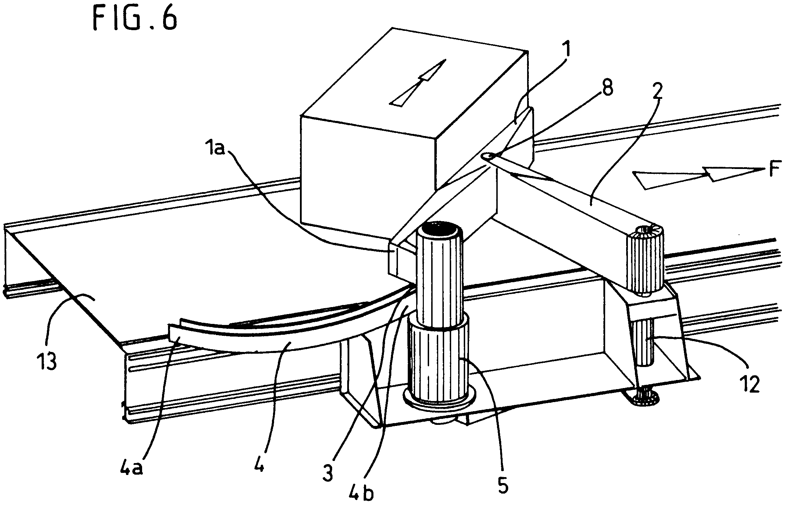

En se reportant aux figures 1 et 2, on voit que selon un premier exemple de réalisation le dispositif est constitué par deux bras 1 et 2 articulés l'un à l'autre par l'axe vertical 8. Le bras 1 est le bras déflecteur et le bras 2 le bras porteur. Le bras porteur 2 est fixé à un arbre vertical 12, situé sur le côté du transporteur 13. L'arbre 12 est entraîné selon un mouvement alternatif de rotation par une manivelle 6 et deux bielles 7 et 11. Lorsque la manivelle 6 est entraînée en rotation par le moteur 5, la bielle 7 est animée d'un mouvement alternatif qu'elle transmet à la bielle 11 qui entraîne l'arbre 12 en rotation tantôt dans un sens, tantôt dans l'autre. Le bras 2 peut ainsi occuper deux positions : une position inactive, dans laquelle il est pratiquement parallèle aux transporteurs 13 en étant dirigé en sens opposé au sens de déplacement F de celui-ci (figures 1, 2, 5) et une position active (figure 6) dans laquelle il est en travers du transporteur 13 en faisant avec celui-ci un angle aigu, inférieur à 90° (de l'ordre de 60° dans l'exemple représenté). Lorsque le bras 2 pivote pour aller de la position inactive à la position active, son extrémité, qui porte l'axe d'articulation 8, décrit un arc de cercle qui va dans la même direction que F.

Le dispositif selon l'invention est, comme visible sur les figures, entièrement disposé le long du transporteur sur un seul côté de celui-ci. Une telle disposition permet d'éviter tout risque de coincement des colis lors de leur déviation vers un autre transporteur. Elle permet de plus de disposer un plus grand nombre de transporteur de sortie vers lesquels les colis doivent être déviés le long du côté du transporteur opposé au dispositif.

Le bras déflecteur 1 est d'une part articulé au bras 2 par l'axe vertical 8, et d'autre part guidé à son extrémité 1a, au moyen d'un galet 3 qui circule dans un chemin de roulement 4. Ce chemin de roulement 4 longe le transporteur 13, il peut être rectiligne mais est de préférence légèrement incurvé avec son point de départ 4a et son point d'arrivée 4b sensiblement sur une ligne droite située sur le côté du transporteur 13 et parallèle à la direction F de déplacement dudit transporteur.

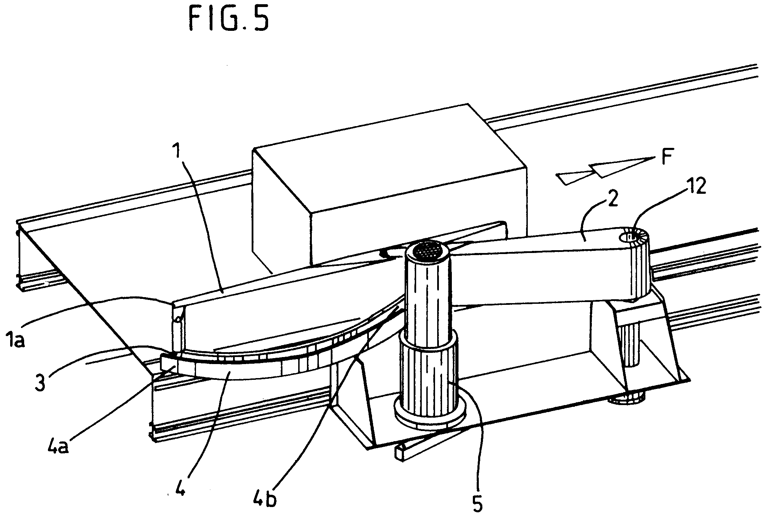

Lorsque l'arbre 12 est mis en mouvement, le bras 2 va de la position initiale inactive, représentée à la figure 5, jusqu'à la position finale active représentée à la figure 6 ; le point d'articulation 8 des deux bras 1 et 2 décrit un arc de cercle, tandis que l'extrémité 1a du bras déflecteur 1 suit le chemin de roulement pour aller de 4a à 4b. Il en résulte que le bras déflecteur 1 se déplace en un mouvement combine au cours duquel il se déplace selon la flèche F tout en pivotant sur lui-même pour se trouver en travers du transporteur 13 à environ 45°.

L'utilisation d'un chemin de roulement incurve permet d'obtenir le passage du bras déflecteur 1 de sa position inactive à sa position active sur une distance plus courte ce qui permet d'effectuer un mouvement complet de déviation d'un colis et de retour en position inactive en un temps très court.

Le transporteur selon l'invention est alors capable de dévier 5000 colis par heure, le temps nécessaire à la déviation d'un colis et au retour du dispositif en position inactive est d'environ 0,4 seconde.

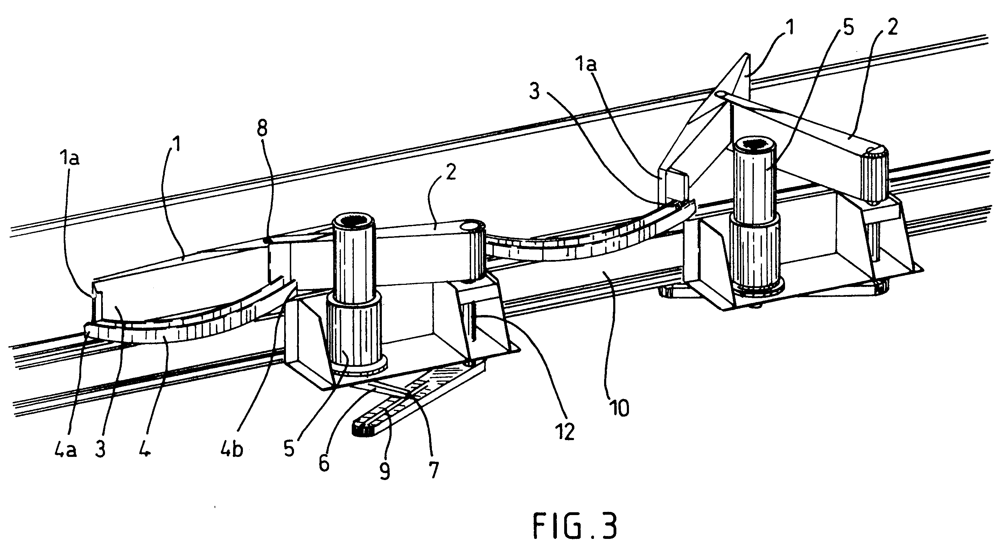

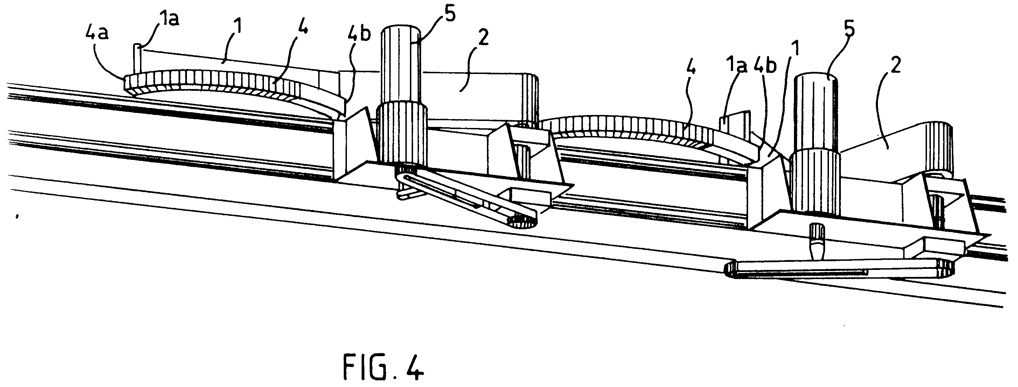

Les figures 3 et 4 sont analogues aux figures 1 et 2 et les mêmes éléments portent les mêmes références. La seule différence provient du mécanisme d'entraînement de l'arbre 12 par le moteur 5. Dans cette disposition, la bielle 11 est supprimée, l'extrémité de la manivelle 6 se déplaçant dans une fenêtre ou rainure 9 pratiquée dans la bielle 7 qui est fixée directement à l'axe 12. Le fonctionnement est. identique à celui des figures 1 et 2.

Le bras porteur 2 mis en oeuvre dans le dispositif selon l'invention joue deux rôles tout à fait intéressants. Ce bras porteur 2 assure le déplacement du bras déflecteur en le tirant par un point de sa longueur afin qu'il coulisse dans le chemin de roulement. Un tel mouvement en traction permet d'éviter les problèmes de coincements pouvant intervenir lors d'un tel coulissement. Par ailleurs, le bras porteur 2 est disposé à l'arrière du bras déflecteur 1 lors de la déviation d'un colis et le maintien fermement à l'encontre des forces exercées par les colis se déplaçant sur le transporteur en formant une genouillère. Le dispositif selon l'invention peut alors manipuler des colis pesant de 0,5 à 70 kg.

De préférence, comme cela est représenté aux figures 5 et 6, le dispositif de déviation est actionne lorsque le colis est à la hauteur du bras 1 ; ce dernier vient alors s'appliquer contre le colis et le dévie tout en l'accompagnant dans son mouvement selon F ; puis une fois le colis déchargé latéralement du transporteur 13 les bras 1 et 2 reviennent à leur position d'origine en attente du prochain colis.

Pour la déviation du colis, le bras déflecteur 1 s'applique par tout son plan contre une face du colis ce qui permet d'éviter les chocs et rend le dispositif utilisable pour la déviation de colis fragiles, par exemple des colis contenant du matériel informatique.

Dans un cas comme dans l'autre, les dispositifs de déviation selon l'invention sont entraînés par un moteur 5 tournant toujours dans le même sens, chaque mouvement de déviation d'un colis et de retour en position inactive est alors fait en démarrant une seule fois le moteur.

De manière avantageuse, grâce aux dispositions de l'invention, Le bras déflecteur commence son mouvement avec une vitesse nulle, il démarre alors doucement ce qui permet d'arriver avec une vitesse peu importante contre le colis à dévier, puis il accélère au cours de son mouvement vers sa position active, décélère à l'approche de sa position active avant de revenir vers sa position inactive en accélérant de nouveau en cours de mouvement pour décélérer à l'arrivée au point mort.

**Revendications**

1. Dispositif de déviation d'objets se déplaçant sur un transporteur ( 13 ) dans une direction (F), du genre comportant un bras déflecteur (1) passant d'une position inactive à une position active pour laquelle il est en travers du transporteur (13) par un mouvement combiné au cour duquel il se déplace dans le même sens (F) que le transporteur (13) tout en pivotant sur lui-même, caractérisé par le fait qu'il est constitué par deux bras (1, 2) articulés l'un à l'autre : un premier bras (1), déflecteur, articulé à l'extrémité (8) d'un deuxième bras (2) porteur ; ledit deuxième bras (2), dirigé en sens inverse du déplacement (F) du transporteur (13) étant porté par un arbre moteur vertical (12), situé sur le côté du transporteur (13), cet arbre l'entraînant en rotation soit dans un sens soit dans l'autre ; l'extrémité (1a) du premier bras (1) étant guidée par des moyens (3, 4) l'obligeant à se déplacer le long du transporteur (13); de telle sorte que lorsque le dispositif est en position inactive les deux bras (1, 2) sont l'un contre l'autre sur le côté du transporteur (13) et lorsqu'ils sont en position active les deux bras (1, 2) fassent un angle l'un avec l'autre, le premier bras (1) étant en travers du transporteur à environ 45°.

2. Dispositif selon la revendication 1, dans lequel le trajet guidé de l'extrémité (1a) du bras déflecteur (1) est rectiligne.

3. Dispositif selon la revendication 1, dans lequel le trajet guidé de l'extrémité (1a) du bras déflecteur (1) est légèrement curviligne, allant d'un point de départ (4a) situé sur un côté du transporteur à un point d'arrivée (4b) situé également à côté du transporteur.

4. Dispositif selon l'une des revendications 2 ou 3 dans lequel l'extrémité (1a) du bras déflecteur (1) porte un galet (3), roulant dans un chemin de roulement (4).

5. Dispositif selon l'une quelconque des revendications 1 à 4, dans lequel l'arbre moteur (12) est entraîné en un mouvement de rotation dans un sens puis dans l'autre par un moteur (5), tournant toujours dans le même sens, au moyen d'un ensemble bielle-manivelle (6, 7, 11).

FIG.1

EP 0 493 219 A1

# FIG.2

EP 0 493 219 A1

FIG.3

EP 0 493 219 A1

FIG. 4

EP 0 493 219 A1

FIG.5

FIG.6

EP 0 493 219 A1

Office européen
des brevets

# RAPPORT DE RECHERCHE EUROPEENNE

Numero de la demande

EP    91 40 3480

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | FR-A-2 022 824 (ELLIOTT BROTHERS)<br>* revendications 1-5; figures 1-3 * | 1,2 | B65G47/76 |
| A,D | | 4 | |
| | --- | | |
| X,D | GB-A-2 223 730 (THE POST OFFICE)<br>* le document en entier * | 1,3,5 | |
| | --- | | |
| X,D | DE-B-2 620 036 (SANDVIK CONVEYOR)<br>* colonne 3, ligne 7 - ligne 37; figures 1-5 * | 1,3,5 | |
| | --- | | |
| X,D | DE-A-2 728 669 (SANDVIK CONVEYOR)<br>* page 8, ligne 18 - page 10, ligne 35; figures 2-7 * | 1,5 | |
| | ----- | | **DOMAINES TECHNIQUES RECHERCHES (Int. Cl.5)**<br><br>B65G |

Le présent rapport a été établi pour toutes les revendications

| Lieu de la recherche | Date d'achèvement de la recherche | Examinateur |
|---|---|---|
| BERLIN | 02 AVRIL 1992 | SIMON J. |